# EUROPEAN PATENT APPLICATION

(11) **EP 0 644 090 A1**
(43) Date of publication of application: **22.03.1995**
(21) Application number: 94306366.9
(22) Date of filing: 30.08.1994
(51) Int. Cl.: B60R 25/00, B60R 25/10

(54) **Improvements in ground supports for articulated vehicles**

(30) Priority: 21.09.1993 GB 9319476; 14.01.1994 GB 9400596
(71) Applicant: Flounders, Michael, Eye, Suffolk IP21 5 PW (GB); Lambourne, Roger, Neston, South Wirral L64 7TZ (GB)
(72) Inventor: Flounders, Michael, Eye, Suffolk IP21 5 PW (GB); Lambourne, Roger, Neston, South Wirral L64 7TZ (GB)
(74) Representative: Stone, Patrick

(57) **Abstract**

A trailer unit for an articulated vehicle, which trailer unit has a raisable and lowerable front end ground support, and a security system which includes a key operable switch (12, 14) enabling operation of a motor for driving the ground support, the switch (12, 14) being incorporated into an electrical circuit which includes a battery (58) and an alarm device (62, 64) which is operated if an attempt is made to raise or lower the ground support without insertion of a key in the key operable switch.

## Description

This invention relates generally to ground supports for articulated vehicles.

Articulated vehicles comprise a tractor unit and a trailer unit disconnectable at a releasable coupling device. Before disconnecting the tractor from the trailer, it is necessary to lower a ground support, in the form of a stand which may or may not be equipped with dolly wheels, beneath the trailer towards the front end thereof. The invention is concerned, more specifically, with this lowerable and raisable ground support.

Currently, when disconnecting or reconnecting a tractor and trailer, the driver or other operator has to lower or raise the ground support by means of a hand winch, which is operated by use of a detachable cranked handle from a standing position adjacent the side of the trailer. This system is disadvantageous, extending disconnection and connection times to at least several minutes. Sometimes, moreover, the driver, on coming to use the winch, finds the detachable handle damaged or that it has been totally mislaid. Moreover, in an endeavour to save time, there is risk that the ground stand will be raised to the minimum level necessary for normal ground clearance, whereby the risk remains of grounding at humps in the road, as at level crossings or bridges, and the risk of pulling the ground support through the snow arises on snow laden roads.

Motor powered ground supports have been proposed, but have not found commercial viability, possibly because, unless made suitably secure, it is possible that a motorised drive will only make it easier for a thief to raise the support in preparation for theft of the complete trailer.

PCT Publication No. WO 92/05981 seeks to overcome this problem in a motor powered ground support by means of a key operable lock which preferably operates mechanically, but may act electrically to cut off the electric supply from the tractor battery to the driving motor. In the latter case, however, assuming the tractor has been driven away, it is relatively easy for a potential thief to connect up a battery brought to the trailer for the purpose in order to be able to raise the ground support preparatory to theft of the complete trailer.

It is an object of this invention to provide an improved system for lowering and raising the front end ground support of the trailer of an articulated vehicle.

According to the present invention, there is provided a trailer unit for an articulated vehicle also having a tractor unit, the trailer unit having a lowerable and raisable front end ground support, wherein the trailer unit also has a security system which includes at least one key operable switch enabling an electric motor to raise or lower the ground support when the tractor unit is connected, the switch being connected in electrical circuitry which includes a battery and an alarm signalling device and forms part of the security system of the trailer, the security system also including means whereby the alarm signalling device is actuated if an attempt is made when the tractor unit is disconnected to raise the support without insertion of the key or keys in the at least one key operable switch.

The term "trailer", as used herein, includes trailers known in the field as semi-trailers, whilst the terms "key" and "key operable switch" include keypads and the like which require operation by use of a key code.

Most preferably, the security system also includes a motor/gear box unit able to drive the ground support, said drive unit being operable to drive the legs to their lowermost limit in the event of the motor being powered without operation of the at least one key operable switch. The motor circuit may conveniently include a relay having a contact in the power supply to the alarm signalling device whereby, when the motor is powered, power is also supplied to the alarm signalling device.

The electrical circuitry preferably also includes a second relay which also has a contact in the power supply circuit to the alarm signalling device, said second relay being operated if the at least one key operable switch is short circuited. Short circuiting the motor, on the other hand, will again cause operation of the first mentioned relay so as to power the alarm signalling device.

Preferably, two key operable switches are provided, one operable by a conventional key and one by a magnetic card key. The magnetic card key may be personalised, at least to the company owning the trailer unit, and be readable by a card reader, so that the magnetic card switch is not operated unless the card is correctly read.

The switch operable by a conventional key may also be a three-way switch which reverses the motor/gear box power supply to drive the ground support up or down (the motor being a reversible d.c. motor), and also has an off position. Alternatively a separate manually operable three way switch may be provided.

The power supply circuit to the alarm signalling device may also include any one or more of the following:-
a) a mercury switch which is operated if the trailer unit is driven away with the ground support in the lowered position;
b) a switch which is operated if an operating panel of the security system is forced or broken into;
c) a switch controlled by a light sensor activated if a control panel door is opened, the control panel is cut open, or a flash occurs due to a short circuit produced due to tampering with the circuitry;
d) a heat sensor switch which is operated if a heat detector at the ground support detects that heat is being generated due to an attempt to cut off the legs of the ground support; and
e) a key operable reset switch for the alarm signalling device.

The alarm signalling device may comprise a visual alarm such as a flashing light as well as an aural alarm such as a bleeper or siren. The flashing light may comprise or at least include the standard vehicle hazard or other standard lights.

However, it is to be understood that the term "alarm signalling device" is intended to be broadly interpreted. For example, this device may include or comprise a signal-transmitting pager which signals the owner or driver of a theft of the trailer, the owner or driver being equipped with a small portable receiver, which may be incorporated into a key-ring as one possibility.

Alternatively or additionally, the alarm signalling device may include or comprise a VHF tracker, enabling a stolen trailer to be tracked by police cars equipped with appropriate VHF receiving equipment. If the owner or driver is provided with a suitable transceiver, the owner or driver may remotely activate the VHF tracker when alerted by a paging signal from the radio pager. The owner or driver can at the same time advise the police of the theft, so that vehicle identification information does not have to be incorporated into the VHF signal transmitted by the VHF tracker.

A further security feature of the system concerns the circuit by which the ground support is normally driven by the power supply from the tractor unit. This power supply may be fed to the trailer unit through the cable which also provides lighting to the trailer unit, which cable if necessary is modified to incorporate heavy duty conductors. Alternatively, a separate 24V power supply cable may power the trailer security system from the tractor unit.

Thus, the ground support is preferably equipped with up and down limit switches and, in the down direction, a ground pressure switch, by means of which the power supply to the motor is broken when a limit or pressure switch is operated. The operation of the pressure switch will normally precede that of the down limit switch, which latter is such that it will raise the trailer unit out of reach of a tractor unit. Thus, when an operator wishes to park the trailer unit and then drive away in the tractor unit, the operator may first lower the ground support as far as permitted by the pressure switch, operation of which is determined by the ground pressure acting on the lowered support, and then disconnect the mechanical coupling between the tractor unit and the trailer unit, leaving the security system power supply cable connected. Then, by means of an inching switch, the operator is able to bypass the pressure switch and lower the ground support as far as permitted by the down limit switch, whereby the trailer unit is raised, as previously stated, out of the reach of a tractor unit. Finally, the operator disconnects the cable providing the power supply to the motor/gear box unit, and removes the keys from the one or more key operable switches, as well as securing the operating panel of the system. In this case, if a potential thief applies power to the motor, it is clearly not possible to drive the ground support any further downwards; nevertheless because power is connected to the motor the first relay above-mentioned which controls the power supply to the alarm signalling device will still be operated. On the other hand, it will be appreciated that if the trailer unit is not left parked in the above-described security mode, but in the standing position determined by the pressure switch, then when a potential thief provides power to the motor, the ground support will be driven down as far as permitted by the down limit switch, as well as the alarm signalling device being operated.

A practical embodiment of security system in accordance with the invention is now described with reference to the accompanying drawings, in which:-
Figure 1 is a security circuit diagram appertaining to the system; and
Figure 2 is a motor power circuit.

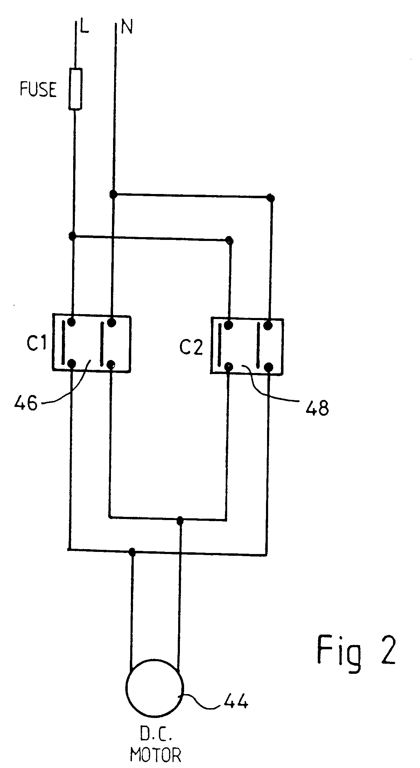

The trailer unit in accordance with the invention has a lowerable and raisable front end ground support powered by an electric motor drive controlled by electrical circuitry primarily shown in Figure 2. The ground support comprises interconnected right and left legs which are telescopically extensible and therefore may have rubber seals at the bottom to prevent risk of seizing up.

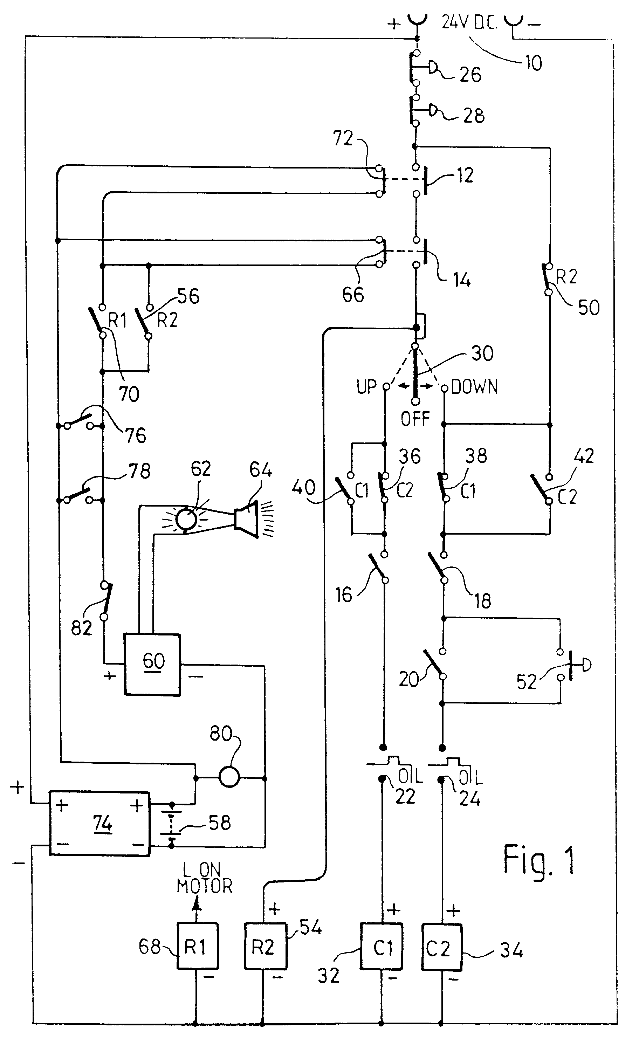

The reversible d.c. 24V motor/gear box unit which drives the ground support is not shown in Figure 1. However, it can be supplied with power from the tractor unit when the trailer unit is connected thereto. This 24V power input, for example fed through the same cable as that which provides lighting for the trailer unit, is indicated at 10.

Thus, when key operable switch 12, magnetic card operable switch 14, up and down limit switches 16, 18, down pressure switch 20, overload switches 22, 24 and emergency stop switches 26, 28 are all closed, and three-way switch 30 is in one of the UP or DOWN postiions, one or other of the contactors 32, 34 will be operated through contact 36 of contactor 34 or contact 38 of contactor 32, and either one contactor held operated thereafter by its holding contact 40 or 42. Then, referring to Figure 2, it will be seen that operation of contactor 32 will close the power lines to the motor 44 at dual contacts 46, thereby to power the motor 44 for driving the ground support upwards, whilst the alternative operation of contactor 34 will close the power lines to the motor 44 at the dual contacts 48, thereby to reverse the motor so that the ground support is driven downwards. It will also be seen that operation of either one contactor 32, 34 opens the power line to the other, at the contact 38 or 36, respectively.

In order to be able to lower or raise the ground support, key switches 12 and 14 must both be closed. Key switch 12 takes a conventional key, and could be arranged also to serve as the triple-way switch. Key switch 14 is a magnetic card switch and incorporates a card reader. Thus, the ground support can only be operated by an operator possessing both the correct conventional key and a magnetic card which is correctly read. The magnetic card may be personalised to the company owning the trailer unit or possibly even to the operator.

Emergency stop switches 26 and 28, which are manually operable, are normally closed, but can be opened in an emergency to stop the motor drive by interrupting the power supply to the contactors 32, 34.

By use of the triple-way switch 30, the operator can likewise stop the drive to the ground support at any time. Normally, however, this switch will not be switched back to the OFF position until the ground support has been driven to its fully raised or fully lowered position.

The UP limit is determined by the limit switch 16, which is carried by one of the legs of the ground support. The DOWN limit is normally determined by the pressure switch 20, which is located to be responsive to ground pressure on the legs of the ground support. However, it will be seen that pressure switch 20 can be by-passed, via relay contact 50 of contactor 34, holding contact 42 and closed down limit switch 18, by inch button switch 52. By use of this button 52, the ground support can be inched further down, thus raising the trailer unit, beyond the normal limit determined by the pressure switch, as far as is permitted before opening of the down limit switch 18, also carried by one of the legs of the ground support.

The inching switch 52 has two purposes. First, if due to uneven ground the pressure switch opens before one leg has engaged the ground, the ground support can be inched down until both legs are in ground engagement. This is enabled by the inherent "give" of the parts of the ground support and its mountings. Second, and more importantly, when the trailer unit is to be parked and the tractor unit driven away, the operator can, after disengaging the mechanical coupling between the tractor unit and the trailer unit, drive the ground support down as far as permitted by the limit switch 18. This will raise the trailer unit out of reach of the tractor unit of a potential thief.

Overload switches 22, 24 are normally closed, but open in the event of an electrical overload, for example due to a motor fault.

Attention is now drawn to the safety circuit on the left-hand side of the circuit diagram.

First, relay 54 is energised by closure of the two key switches 12, 14. This relay has a contact 56 in an alarm circuit which includes a battery 58 and a security relay 60 for controlling a flashing alarm 62 and sounder 64 as well as a supplementary contact 66 of the magnetic card switch 14. The visual alarm may include the vehicle hazard lights.

Second, relay 68 analogously has a contact 70 in a parallel loop of the alarm circuit, which parallel loop also contains a supplementary contact 72 of the conventional key switch 12. Relay 68, however, is energised if power is connected to the "live" side of the motor/gear box unit.

It will thus be understood that if a potential thief attempts to by-pass the key switches 12, 14 in order to power the motor, contact 66 of key switch 14 will remain closed, and energisation of relay 54 will complete the alarm circuit at its contact 56.

Analogously, if a potential thief in any way provides power on the live side of the motor, as for example from a supplementary battery brought to the site for the purpose, then with contact 72 of key switch 12 remaining closed, closure of contact 70 due to energisation of the relay 68 will also operate the alarms 62, 64.

Additionally, however, it will be appreciated that provision of power on the live side of the motor will immediately cause the ground support to be driven down to the maximum possible extent, thus raising the trailer unit out of reach of a tractor unit. Down pressure switch 20 will not be operable because it is effectively by-passed.

Battery 58, which powers the alarm circuit, is kept charged when the trailer unit is connected to the tractor unit, i.e. during normal use, through charger unit 74.

It will also be seen that, independently of relays 54 and 68, the alarm circuit can also be activated by closure of either one of a panel switch 76 and a heat switch 78. Panel switch 76 closes if an attempt is made to force or break into the operating panel of the security system, i.e. the panel carrying all the operating switches, in an endeavour to gain access to the circuitry behind the panel. Heat switch 78 is closed if a heat detector 80, provided for example in the legs of the ground support, detects the presence of heat due to an attempt to saw off the legs of the ground support.

Reference 82 denotes a reset switch for the alarm circuit, operable only by means of a key.

Although not shown, the alarm circuit also contains a mercury tilt switch, which will cause operation of the alarms if, in some manner and in spite of the raised level of the trailer, a thief attempts to tow the trailer unit away without raising the ground support.

It is also possible to incorporate a radio pager and/or VHF tracker in the alarm circuit. These devices may be concealed in a remote part of the vehicle. In conjunction with these devices, the owner or driver of the vehicle is equipped with a suitable transceiver, and is paged by a paging signal from the radio pager if the alarm circuit is activated. The owner or driver can thereby inform police of the theft, and remotely activate the VHF tracker.

## Claims

1. A trailer unit for an articulated vehicle also having a tractor unit, the trailer unit having a lowerable and raisable front end ground support, characterised in that the trailer unit also has a security system which includes at least one key operable switch (12, 14) enabling an electric motor to raise or lower the ground support when the tractor unit is connected, the switch being connected in electrical circuitry which includes a battery(58) and an alarm signalling device (62, 64) and forms part of the security system of the trailer, the security system also including means (68, 70) whereby the alarm signalling device is actuated if an attempt is made when the tractor unit is disconnected to raise the support without insertion of the key or keys in the at least one key operable switch.

2. A trailer unit according to claim 1, characterised in that the security system also includes a motor/gear box unit (44) able to drive the ground support, said drive unit being operable to drive the legs to their lowermost limit in the event of the motor being powered without operation of the at least one key operable switch (12, 14).

3. A trailer unit according to claim 2, characterised in that the motor circuit includes a relay (68) having a contact (70) in the power supply to the alarm signalling device whereby, when the motor is powered, power is also supplied to the alarm signalling device.

4. A trailer unit according to claim 3, characterised in that the electrical circuitry also includes a second relay (54) which also has a contact (56) in the power supply circuit to the alarm signalling device (62, 64), said second relay being operated if the at least one key operable switch (12, 14) is short circuited.

5. A trailer unit according to any of claims 1 to 4, characterised in that two key operable switches (12, 14) are provided, one operable by a conventional key and one by a magnetic card key.

6. A trailer unit according to claim 5, characterised in that the magnetic card key is personalised, at least to the company owning the trailer unit, and is readable by a card reader, so that the magnetic card switch (14) is not operated unless the card is correctly read.

7. A trailer unit according to claim 5 or claim 6, characterised in that the switch (12) operable by a conventional key is a three-way switch which reverses the motor/gear box power supply to drive the ground support up or down (the motor being a reversible d.c. motor), and also has an off position.

8. A trailer unit according to any of claims 1 to 7, characterised in that the power supply circuit to the alarm signalling device also includes any one or more of the following:-
a) a mercury switch which is operated if the trailer unit is driven away with the ground support in the lowered position;
b) a switch (76) which is operated if an operating panel of the security system is forced or broken into;
c) a switch operable by a light sensor behind the operating panel;
d) a heat sensor switch (78) which is operated if a heat detector at the ground support detects that heat is being generated due to an attempt to cut off the legs of the ground support; and
e) a key operable reset switch (82) for the alarm signalling device.

9. A trailer unit according to any of claims 1 to 8, characterised in that the alarm signalling device comprises any one or more of:-
a) a visual and aural alarm (62, 64);
b) a signal-transmitting pager for alerting the owner or driver; and
c) a VHF tracker.

10. A trailer unit according to any of claims 1 to 9, characterised in that a power supply from the tractor unit is fed to the trailer unit through the cable which also provides lighting to the trailer unit.

11. A trailer unit according to any of claims 1 to 10, characterised in that the ground support is equipped with up and down limit switches (16, 18) and, in the down direction, a ground pressure switch (20), by means of which the power supply to the motor is broken when a limit or pressure switch is operated, the operation of the pressure switch preceding that of the down limit switch, which latter is such that it will raise the trailer unit out of reach of a tractor unit.
